# EUROPÄISCHE PATENTSCHRIFT

(11) **EP 3 665 025 B1**
(45) Veröffentlichungstag und Bekanntmachung des Hinweises auf die Patenterteilung: **07.07.2021**
(21) Anmeldenummer: 18750388.3
(22) Anmeldetag: 31.07.2018
(51) Int. Cl.: B60J 10/82, B60J 7/043

(54) **DACHANORDNUNG FÜR EIN FAHRZEUGDACH UND FAHRZEUGDACH MIT EINER DACHÖFFNUNG**
ROOF ARRANGEMENT FOR A VEHICLE ROOF AND VEHICLE ROOF WITH A ROOF OPENING
ENSEMBLE TOIT POUR TOIT DE VÉHICULE ET TOIT DE VÉHICULE PRÉSENTANT UNE OUVERTURE DE TOIT

(30) Priorität: 11.08.2017 DE 102017118397
(43) Veröffentlichungstag der Anmeldung: 17.06.2020
(73) Patentinhaber: Webasto SE, 82131 Stockdorf (DE)
(72) Erfinder: FRANK, Matthias, 82131 Stockdorf (DE); SCHÄUFLER, Stefan, 82131 Stockdorf (DE); ZUNZER, Andreas Josef, 82131 Stockdorf (DE); WENZEL, Reinhard, 82131 Stockdorf (DE)
(74) Vertreter: Epping - Hermann - Fischer
(86) Internationale Anmeldenummer: PCT/EP2018/070731
(87) Internationale Veröffentlichungsnummer: WO 2019/030053

(56) Entgegenhaltungen:
- CN-A- 104 553 698
- JP-A- H0 840 076
- US-A1- 2015 151 617

## Beschreibung

Die Anmeldung betrifft eine Dachanordnung für ein Fahrzeugdach, insbesondere für ein Fahrzeugdach mit einem beweglichen Dachelement. Die Erfindung betrifft weiterhin ein Fahrzeugdach mit einer solchen Dachöffnung.

Ein Fahrzeugdach eines Kraftfahrzeugs kann eine Dachöffnung aufweisen, die von einem beweglichen Dachelement verschlossen wird und wahlweise zumindest teilweise freigegeben wird. Zum Abdichten des Fahrzeugdachs mit dem beweglichen Dachelement ist beispielsweise eine Dichtung vorgesehen. Diese Dichtung soll vermeiden, dass eindringendes Wasser in einen Trockenbereich des Fahrzeugdachs bzw. des Kraftfahrzeugs gelangt.

JP H08 40076 A betrifft eine Rahmendichtung, die in Richtung einer Bodenwand des Schiebedachrahmens verlängert ist und mit einem U-förmigen Querschnitt ausgebildet im verlängerten Teil ausgebildet ist.

CN 104 553 698 A beschreibt eine Schienenstruktur, einen festen Rahmen, eine feste Glasscheibe und eine bewegliche Glasscheibe. Der Rahmen ist fest mit der Schienenstruktur verbunden, und die Seite des festen Rahmens erstreckt sich nach außen um eine Mulde.

US 2015/151617 A1 betrifft eine Verstärkungsstruktur eines Panorama-Schiebedachs, das in einer Fahrzeugbreitenrichtung zwischen einer Frontscheibe und einer Heckscheibe, die an einer Decke eines Fahrzeugs angeordnet sind, gekoppelt ist.

Es ist wünschenswert, eine Dachanordnung anzugeben, die ein verlässliches Abdichten ermöglicht. Es ist zudem wünschenswert ein Fahrzeugdach mit einer solchen Dachanordnung anzugeben, das verlässlich abdichtbar ist.

Gemäß einem Aspekt weist eine Dachanordnung für ein Fahrzeugdach ein bewegliches Dachelement auf. Das Fahrzeugdach weist eine Dachöffnung auf. Das bewegliche Dachelement ist eingerichtet, wahlweise die Dachöffnung zu verschließen oder zumindest teilweise freizugeben. Das Dachelement ist von einem Rahmen der Dachanordnung gehalten. Die Dachanordnung weist ein erstes strangförmiges Dichtungsprofil und ein zweites strangförmiges

Dichtungsprofil auf. Das zweite strangförmige Dichtungsprofil ist separat zu dem ersten Dichtungsprofil ausgebildet.

Insbesondere sind das erste Dichtungsprofil und das zweite Dichtungsprofil, bevor sie montiert sind, relativ zueinander beweglich und insbesondere getrennt voneinander hergestellt. Beispielsweise weisen das erste Dichtungsprofil und das zweite Dichtungsprofil unterschiedliche Materialien auf. Insbesondere sind das erste Dichtungsprofil und das zweite Dichtungsprofil jeweils eigenständige Bauteile, die unabhängig voneinander montierbar sind.

Das erste Dichtungsprofil ist zur Abdichtung gegenüber dem beweglichen Dachelement eingerichtet und an dem Fahrzeugdach befestigbar. Das zweite Dichtungsprofil ist an dem Rahmen befestigt und zur Abdichtung gegenüber dem Rahmen eingerichtet. Das zweite Dichtungsprofil weist eine Abtropflippe auf, die an dem Rahmen anliegt.

Die Dachöffnung mit den zwei separaten Dichtungsprofilen ermöglicht, dass unterschiedliche Dichtungsfunktionen von den separaten Dichtungsprofilen realisiert werden. Insbesondere ist das erste Dichtungsprofil für ein Abdichten gegenüber dem Fahrzeugdach vorgesehen und auch an dem Fahrzeugdach befestigt. Das zweite Dichtungsprofil ist für ein Abdichten gegenüber dem Rahmen vorgesehen und auch an dem Rahmen fixiert. Folglich sind die beiden Dichtungsprofile jeweils an dem Bauteil fixiert oder fixierbar, gegenüber dem sie auch abdichten sollen.

Im betriebsfertigen Zustand ist das erste Dichtungsprofil an dem Fahrzeugdach befestigt und dichtet bei geschlossenem Dachelement den Übergang zwischen dem Dachelement und dem Fahrzeugdach ab. Wasser, das dennoch zwischen dem ersten Dichtungsprofil und dem Dachelement nach innen gelangt, wird in einen Wasserführungskanal des Rahmens geleitet. Damit eindringendes Wasser möglichst vollständig in diesem Wasserführungskanal geleitet wird und kontrolliert abgeführt werden kann und nicht in einen Trockenbereich gelangt, ist das zweite Dichtungsprofil vorgesehen. Das zweite Dichtungsprofil dichtet mit dem Rahmen so ab, dass Wasser nicht entlang des Rahmens ins Innere des Kraftfahrzeugs in einen Trockenbereich gelangen kann. Insbesondere wird verhindert, dass eindringendes Wasser über das zweite Dichtungsprofil in den Trockenbereich gelangt.

Mittels der Ausführung in zwei separate Dichtungsprofile wird ermöglicht, dass die Abdichtung gegenüber dem Rahmen verlässlich erfolgt unabhängig von einer Wölbung des Rahmens und einer Wölbung des Fahrzeugdachs. Insbesondere können der Rahmen und das Fahrzeugdach unterschiedlich gewölbt sein, so dass sich ein Abstand zwischen dem Rahmen und dem Fahrzeugdach zumindest abschnittsweise verändert. Die Abtropflippe des zweiten Dichtungsprofils ist unabhängig von der Wölbung des Fahrzeugdachs stets in der gleichen Relativposition zum Rahmen und weist somit eine verlässliche Überpressung zum Rahmen auf. Hierdurch wird eine signifikante Erhöhung der Robustheit des gesamten Wassermanagements erzielt, insbesondere im Vergleich zu herkömmlichen Dichtungskonzepten mit einer einzigen Dichtung, die sowohl gegenüber dem beweglichen Dachelement als auch gegenüber dem Rahmen abdichtet.

Gemäß zumindest einer Ausführungsform ist die Abtropflippe länglich vorspringend ausgebildet, um eine gemeinsame Kontaktfläche mit dem Rahmen auszubilden, an der die Abtropflippe an dem Rahmen anliegt. Die Kontaktflächen ist insbesondere entlang der gesamten Länge der Abtropflippe ausgebildet, so dass möglichst kein Spalt zwischen der Abtropflippe und dem Rahmen entsteht, durch den Wasser in den Trockenbereich eindringen könnte.

Gemäß zumindest einer Ausführungsform weisen das zweite Dichtungsprofil und der Rahmen eine gemeinsame Klebeverbindung auf. Das zweite Dichtungsprofil ist mittels der Klebeverbindung mit dem Rahmen verklebt. Somit ist eine physische Trennung zwischen dem Trockenbereich und dem Nassbereich möglich. Die Klebeverbindung bildet die Befestigung des Dichtungsprofils an dem Rahmen aus. Alternativ oder zusätzlich ist das zweite Dichtungsprofil mittels einer Steckverbindung am Rahmen befestigt. Das zweite Dichtungsprofil ist mittels der Steckverbindung mit dem Rahmen verbunden. Somit ist eine physische Trennung zwischen dem Trockenbereich und dem Nassbereich möglich. Die Steckverbindung bildet die Befestigung des Dichtungsprofils an dem Rahmen aus.

Gemäß zumindest einer Ausführungsform erstreckt sich die Abtropflippe ausgehend von der Klebeverbindung hin zum Rahmen. Insbesondere ist die Kontaktfläche der Abtropflippe mit dem Rahmen an einer der Klebeverbindung abgewandten Seite der Abtropflippe ausgebildet.

Gemäß zumindest einer weiteren Ausführungsform weist das erste Dichtungsprofil eine Montagefläche auf, mit der das erste Dichtungsprofil an dem Fahrzeugdach befestigbar ist. Das erste Dichtungsprofil wird nicht mit dem Rahmen verbunden, sondern im betriebsfertigen Zustand mit dem Fahrzeugdach, insbesondere mit dem Teil des Fahrzeugdachs, der die Dachöffnung begrenzt.

Gemäß zumindest einer Ausführungsform weist das zweite Dichtungsprofil eine Dichtlippe auf zum Abdichten gegenüber dem Fahrzeugdach. Im betriebsfertigen Zustand liegt die Dichtlippe am Fahrzeugdach an, so dass eine verlässliche Abdichtung zwischen dem Rahmen und dem Fahrzeugdach mittels des zweiten Dichtungsprofils realisiert ist. Die Dichtlippe dient beispielsweise zur Abdichtung gegenüber Staub und Akustik. Zudem trägt die Dichtlippe dazu bei, dass möglichst kein Wasser in den Trockenbereich gelangt.

Gemäß zumindest einer Ausführungsform weist das erste Dichtungsprofil eine weitere Abtropflippe auf. Die Abtropflippe dient dazu, dass eindringendes Wasser unmittelbar am Ort des Eindringens über die weitere Abtropflippe in den Nassbereich abtropft. Die von der weiteren Abtropflippe abtropfenden Wassertropfen werden beispielsweise in den Wasserführungskanal geführt und sicher abgeführt. Die weitere Abtropflippe ist beispielsweise ein abstehendes oder hervorragendes Element, welches dazu eingerichtet ist, dass ein daran anhaftender Tropfen, insbesondere ein Wassertropfen, von dem Dichtungsprofil definiert abtropfen und ablaufen kann.

Gemäß zumindest einer Ausführungsform weist das erste Dichtungsprofil einen ersten Dichtungsschlauch auf. Gemäß zumindest einer weiteren Ausführungsform weist das zweite Dichtungsprofil einen zweiten Dichtungsschlauch auf. Insbesondere sind die einzelnen Elemente der Dichtungsprofile jeweils an dem Dichtungsschlauch ausgebildet. Beispielsweise ist die Klebeverbindung an dem Dichtungsschlauch ausgebildet.

Insbesondere springt die Abtropflippe von dem Dichtungsschlauch des zweiten Dichtungsprofils vor. Beispielsweise springt auch die Dichtlippe des zweiten Dichtungsprofils von dem Dichtungsschlauch des zweiten Dichtungsprofils vor. Beispielsweise ist die weitere Abtropflippe als vorspringendes Element des Dichtungsschlauchs des ersten Dichtungsprofils ausgebildet.

Ein Fahrzeugdach gemäß zumindest einer Ausführungsform weist eine Dachöffnung auf. Das Fahrzeugdach weist eine Dachordnung gemäß zumindest einer anmeldungsgemäßen Ausführungsform auf. Das Fahrzeugdach weist das bewegliche Dachelement zum wahlweisen Verschließen oder zumindest teilweisen Freigeben der Dachöffnung auf. Der Rahmen, der das bewegliche Dachelement hält, ist mit dem Fahrzeugdach gekoppelt, beispielsweise verschraubt. Das erste strangförmige Dichtungsprofil ist an dem Fahrzeugdach befestigt, beispielsweise verklebt und/oder mechanisch fixiert. Das zweite strangförmige Dichtungsprofil ist separat zu dem ersten Dichtungsprofilausgebildet ist. Das Fahrzeugdach weist somit zwei separate Dichtungsprofile auf, wovon eins an dem Fahrzeugdach selbst fixiert ist und das andere an dem Rahmen fixiert ist.

Gemäß zumindest einer Ausführungsform weisen das erste Dichtungsprofil und das zwei Dichtungsprofil entlang einer Hauptausdehnungsrichtung zumindest abschnittsweise einen sich ändernden Abstand zueinander auf. Insbesondere wenn der Rahmen und das Fahrzeugdach einen sich ändernden Abstand zueinander aufweisen, weisen auch die beiden Dichtungsprofile den sich ändernden Abstand zueinander auf. Aufgrund der Auftrennung in die zwei separaten Dichtungsprofile ist ein zuverlässiges Abdichten trotz des sich ändernden Abstands möglich. Insbesondere ist der Kontakt der Abtropflippe des zweiten Dichtungsprofils mit dem Rahmen stets gegeben, auch wenn sich der Abstand des Rahmens zum Fahrzeugdach verändert. Es wird vermieden, dass die Abtropflippe des zweiten Dichtungsprofils von dem Rahmen abhebt, beispielsweise wenn sich der Abstand zwischen Rahmen und Fahrzeugdach vergrößert.

Weitere Vorteile, Merkmale und Weiterbildungen ergeben sich aus den nachfolgenden, in Verbindung mit den Figuren erläuterten Beispielen.

Gleiche, gleichartige und gleichwirkende Elemente können in den Figuren mit gleichen Bezugszeichen versehen sein.

Es zeigen:
Figur 1 eine schematische Darstellung eines Fahrzeugdachs gemäß einem Ausführungsbeispiel,
Figur 2 eine schematische Querschnittsansicht einer Dachanordnung gemäß einem Ausführungsbeispiel,
Figur 3 eine schematische Querschnittsansicht der Dachanordnung gemäß einem Ausführungsbeispiel, und
Figur 4 eine schematische Perspektivansicht der Dachanordnung gemäß einem Ausführungsbeispiel.

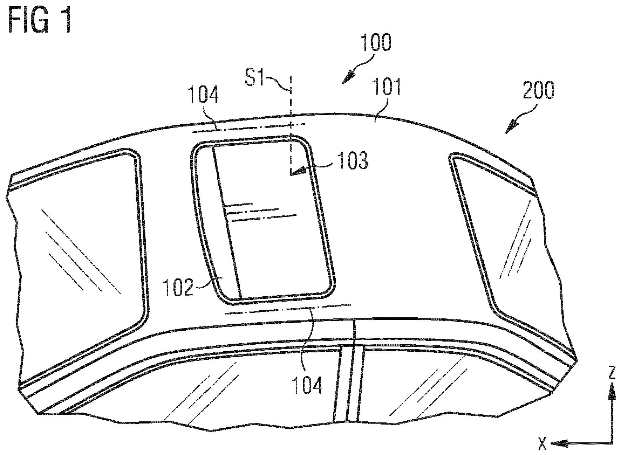

Figur 1 zeigt ein Fahrzeugdach 101 eines Kraftfahrzeugs 200. Das Fahrzeugdach 101 ist insbesondere das fahrzeugfeste Dach, das auch Dachhaut genannt wird. Das Fahrzeugdach 101 umgibt eine Dachöffnung 102. Die Dachöffnung 102 ist mittels eines entlang einer Richtung X verschiebbaren beweglichen Dachelements 103 wahlweise verschlossen oder zumindest teilweise freigebbar.

Das bewegliche Dachelement 103, auch Deckel genannt, wird von einem Rahmen 104 gehalten. Der Rahmen 104 weist beispielsweise Führungsschienen auf, die beidseitig der Dachöffnung 102 am Fahrzeugdach 101 befestigt sind. Der Rahmen weist insbesondere weitere Elemente auf, die beispielsweise quer zur X-Richtung an einer Vorderseite der Dachöffnung 102 angeordnet sind. Der Rahmen 104 dient insbesondere zum Führen der Bewegung des Dachelements 103 sowie zum Halten weiterer Elemente wie Antriebsmotoren und/oder Kabel. Das Dachelement 103 und der Rahmen 104 sind insbesondere Teile einer Dachanordnung 100, die als eigenständige Baugruppe mit dem Fahrzeugdach 101 verwendbar ist.

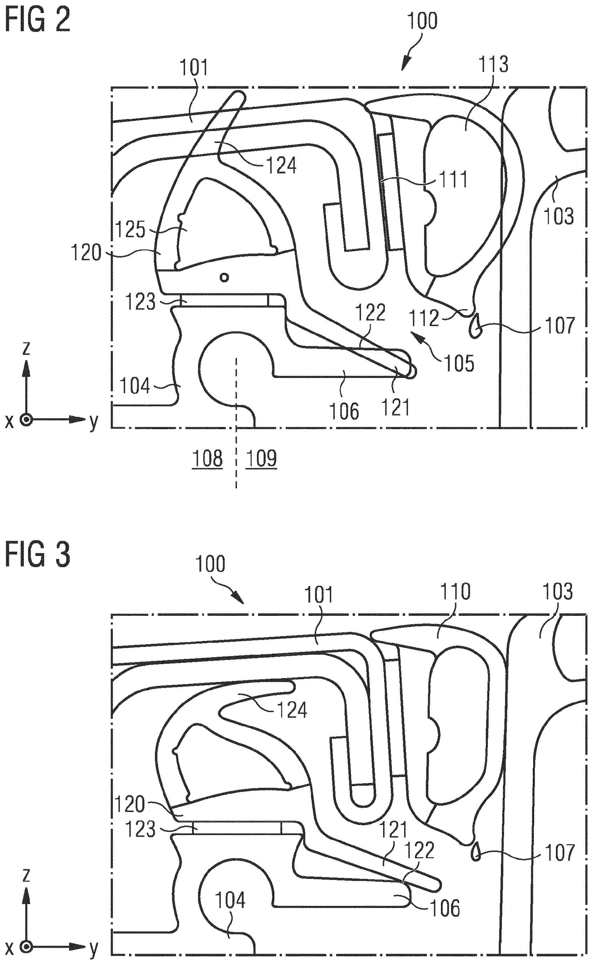

Figur 2 zeigt eine schematische Schnittansicht entlang einer beispielhaften Schnittebene S1 (Figur 1). Die Dachanordnung 100 weist zusätzlich zum Dachelement 103 und dem Rahmen 104 ein erstes strangförmiges Dichtungsprofil 110 und ein zweites strangförmiges Dichtungsprofil 120 auf. Das erste Dichtungsprofil 110 kann als Dachausschnittsdichtung und das zweite Dichtungsprofil 120 als Sekundärdichtung bezeichnet werden. Die beiden Dichtungsprofile 110, 120 sind elastisch nachgiebig, federnd. Beispielsweise sind zumindest Dichtabschnitte der Dichtungsprofile 110 und 120 jeweils aus geschäumtem und/oder weichem Gummi-, gummiartigem oder gummiähnlichem Material hergestellt, während andere Abschnitte des Dichtungsprofils aus härterem Material, insb. gummiähnlichem oder Gummi-Material, hergestellt sind. Beispielhafte Materialien sind EPDM, Moosgummi, NBR oder Silikonkautschuk.

Die beiden Dichtungsprofile 110, 120 weisen jeweils eine Hauptausdehnungsrichtung auf, die in den Figuren 2 und 3 der X-Richtung entspricht. Entlang der Hauptausdehnungsrichtung sind die Dichtungsprofile 110, 120 jeweils länger ausgebildet als in den beiden anderen Richtungen quer zur Hauptausdehnungsrichtung. In den Figuren 2 und 3 sind die Dichtungsprofile 110, 120 jeweils mehr entlang der X-Richtung ausgedehnt als in die Y-Richtung und die Z-Richtung.

Das erste Dichtungsprofil 110 dient zum Abdichten des beweglichen Dachelements 113. Das zweite Dichtungsprofil 120 dient zum Abdichten des Rahmens 104 und ist zwischen dem Rahmen 104 und dem Fahrzeugdach 101 entlang einer Z-Richtung angeordnet. Das erste Dichtungsprofil ist entlang einer Y-Richtung zwischen dem Fahrzeugdach 101 und dem Dachelement 103 angeordnet. Die Richtungen X, Y, Z sind insbesondere jeweils senkrecht zueinander.

Figur 2 zeigt die beiden Dichtungsprofile 110 und 120 in ihrer Ausdehnung, bevor sie tatsächlich im betriebsfertigen Zustand sind. Figur 3 zeigt die beiden Dichtungsprofile 110 und 120 wie sie von den angrenzenden Bauelementen, insbesondere von dem Dachelement 103, dem Rahmen 104 und dem Fahrzeugdach 101 verdrückt werden, um eine Abdichtung gegenüber Wasser 107 sowie Staub und Schall zu gewährleisten.

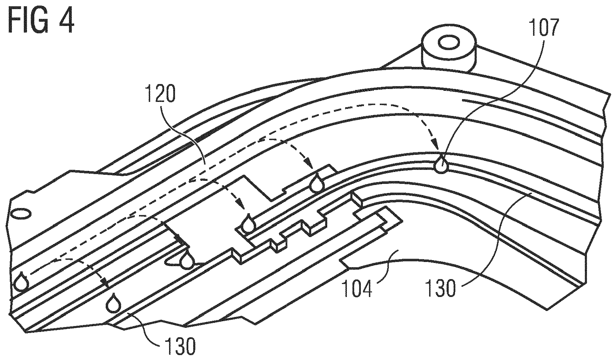

Bei geschlossenem Fahrzeugdach 101, also wenn das Dachelement 103 vollständig in der Dachöffnung 102 angeordnet ist, dichtet das erste Dichtungsprofil 110 den Übergang zwischen dem Fahrzeugdach 101 und dem Dachelement 103 weitestgehend ab. Dennoch kann Wasser 107 zwischen dem Dachelement 103 und dem Dichtungsprofil 110 entgegen der Z-Richtung in Richtung des Fahrzeuginneren gelangen. Dieses Wasser wird in einem Nassbereich 109 in einen Wasserführungskanal 130 (Figur 4) und von dort kontrolliert abgeleitet. Somit kann verhindert oder zumindest weitestgehend verhindert werden, dass Wasser in einen Trockenbereich 108 des Fahrzeugs 200 gelangt.

Das erste Dichtungsprofil 110 weist einen ersten Dichtungsschlauch 113 auf. Das erste Dichtungsprofil 110 ist beispielsweise aus Gummi oder einem gummiähnlichen Werkstoff hergestellt. Der erste Dichtungsschlauch 113 dichtet zum beweglichen Dachelement 103 hin ab. Beispielsweise ist am ersten Dichtungsschlauch 113 eine Montagefläche 111 vorgesehen. In der Montagefläche 111 ist das erste Dichtungsprofil 110 mit dem Fahrzeugdach 101 verbunden, beispielsweise verklebt. Das erste Dichtungsprofil 110 ist beispielsweise mittels der Verklebung gegenüber dem Fahrzeugdach 101 abgedichtet.

An dem ersten Dichtungsschlauch 113 ist eine Abtropflippe 112 vorgesehen. Die Abtropflippe 112 weist nach unten, etwa in negative Z-Richtung. Die Abtropflippe 112 ist beispielsweise aus Solid, Moosgummi oder einem Kombination aus beidem gebildet. An der Abtropflippe 112 tropft Wasser ab, das zwischen dem ersten Dichtungsprofil 110 und dem Dachelement 103 in Richtung des Fahrzeuginneren gelangt. Beispielsweise wenn das Kraftfahrzeug 200 geneigt ist, ist es möglich, dass Wasser in Richtung des Rahmens 104 abtropft, wie in Figuren 2 und 3 dargestellt. Zum Vermeiden, dass dieses Wasser in den Trockenbereich 108 gelangt, ist das zweite Dichtungsprofil 120 vorgesehen, das separat und getrennt von dem ersten Dichtungsprofil 110 ausgebildet ist.

Das zweite Dichtungsprofil 120 ist aus einem Gummi oder einem gummiähnlichen Material gebildet und insbesondere zumindest teilweise flexibel und/oder federnd. Das zweite Dichtungsprofil 120 weist einen zweiten Dichtungsschlauch 125 auf. An dem zweiten Dichtungsschlauch 125 ist eine Abtropflippe 121 ausgebildet. Die Abtropflippe 121 erstreckt sich ausgehend von dem zweiten Dichtungsschlauch 125 in Richtung des Rahmens 104 und in Richtung des Dachelements 103. Die Abtropflippe 121 kann in unterschiedlichen Formen ausgebildet sein, beispielsweise gerade, gekrümmt, und vorspringende oder zurückgesetzte Bereiche aufweisen, beispielsweise eine Zusatznase.

Die Abtropflippe 121 weist eine gemeinsame Kontaktfläche 122 mit dem Rahmen 104 auf. Die Abtropflippe 121 wird gegen den Rahmen 104 gedrückt, so dass an der gemeinsamen Kontaktfläche 122 kein Wasser zwischen das zweite Dichtungsprofil 120 und den Rahmen 104 gelangen kann. Die Abtropflippe 121 ist an einem dem Dachelement 103 abgewandten Ende entgegen der Y-Richtung mit dem zweiten Dichtungsschlauch 125 verbunden. Das gegenüberliegende Ende, das dem zweiten Dichtungsschlauch 125 abgewandt ist und dem Dachelement 103 zugewandt ist, ist ein freies Ende der Abtropflippe 121. An diesem freien Ende ist die Kontaktfläche 122 ausgebildet.

Das zweite Dichtungsprofil 120 ist mittels einer Klebeverbindung 123 mit dem Rahmen 104 verbunden. Beispielsweise ist das zweite Dichtungsprofil 120 mittels der Klebeverbindung 123 auf einer Führungsschiene des Rahmens 104 geklebt. Die Klebeverbindung ist insbesondere in einer Ebene ausgebildet, die ihre Hauptausdehnungsrichtung in der XY-Ebene aufweist. Der Rahmen 104 weist eine Rippe 106 auf, die ebenfalls ihre Hauptausdehnung in der XY-Ebene aufweist.

Ausgehend von dem Bereich des zweiten Dichtungsprofils, an der die Klebeverbindung 123 ausgebildet ist, erstreckt sich die Abtropflippe 121 zunächst leicht in negativer Z-Richtung und anschließend hauptsächlich entlang der Y-Richtung, so dass die Abtropflippe 121 entlang der Y-Richtung zwischen der Klebeverbindung 123 und dem Dachelement 103 an die Rippe 106 angepresst wird und die Kontaktfläche 122 ausgebildet ist.

Das zweite Dichtungsprofil 120 weist an einer in Z-Richtung oberen Seite eine Dichtlippe 124 auf. Die Dichtlippe 124 wird im betriebsfertigen Zustand mit dem Fahrzeugdach 101 verpresst und dichtet hauptsächlich gegenüber Staub und Schall ab, der somit nicht oder nur verringert ins Fahrzeuginnere gelangt.

Das erste und das zweite Dichtungsprofil 110 und 120 weisen einen Abstand 105 zueinander auf und berühren einander insbesondere nicht. Der Abstand 105 ist beispielsweise entlang der gesamten Länge der beiden Dichtungsprofile 110 und 120 ausgebildet.

Figur 4 zeigt eine perspektivische Darstellung des Rahmens 104. An dem Rahmen 104 ist das zweite Dichtungsprofil 120 umlaufend angebracht. Gemäß weiteren Ausführungsbeispielen erstreck sich das zweite Dichtungsprofil 120 nur entlang Teilbereichen. Das zweite Dichtungsprofil 120 ist insbesondere bereits mit dem Rahmen 104 verbindbar, bevor der Rahmen 104 mit dem Fahrzeugdach 101 gekoppelt wird. Das Wasser 107, das während des Betriebs nach Innen gelangen kann, wird von dem zweiten Dichtungsprofil 120 und insbesondere der Abtropflippe 121 verlässlich in den Wasserführungskanal 130 geführt. Es wird vermieden, dass Wasser aus dem Nassbereich 109 in den Trockenbereich 108 gelangen kann, da das zweite Dichtungsprofil 120 mit dem Rahmen 104 fest verbunden ist und somit eine physikalische Trennung zwischen dem Trockenbereich 108 und dem Nassbereich 109 ausgebildet ist. Durch die Befestigung des zweiten Dichtungsprofils 120 an dem Rahmen 104, gegenüber dem das zweite Dichtungsprofil 120 auch abdichten soll, wird eine Abhebung des zweiten Dichtungsprofils 120 von dem Rahmen 104 verhindert. Ein solches Abheben würde eine Schwachstelle im Fahrzeugdach 101 darstellen und ermöglichen, dass Wasser vom Nassbereich 109 in den Trockenbereich 108 gelangen kann.

Das erste Dichtungsprofil 110 und das zweite Dichtungsprofil 120 sind somit sowohl an dem Fahrzeugdach 101 als auch am Rahmen 104 befestigt. Das an dem Fahrzeugdach 101 befestigte erste Dichtungsprofil übernimmt die Funktionen: Abdichtung des Dachelements 103 gegen das Fahrzeugdach 101 mittels des Dichtungsschlauchs 113; definiertes Abführen von eindringendem Wasser 107 in den Nassbereich 109 der Dachanordnung 100 mittels der weiteren Abtropflippe 112. Das zweite Dichtungsprofil 120, das an dem Rahmen 104 befestigt ist, übernimmt die Funktionen: Abdichtung des Dachelements 103 gegen Staub und Geräusche mittels dem zweiten Dichtungsschlauch 125 und der Dichtlippe 124; Abdichten gegen die obere Rippe 106 des Rahmens 104 zur Steigerung der Robustheit des Wassermanagements mittels der Abtropflippe 121.

Das anmeldungsgemäße Dichtkonzept mit den zwei voneinander getrennten Dichtungsprofilen 110, 120 ermöglicht ein Sicherstellen bei den gegebenen Bauraumverhältnissen, dass in möglichst allen Neigungen des Daches das an dem ersten Dichtungsschlauch 113 eindringende Wasser möglichst vollständig in den dafür vorgesehenen wasserführende Nassbereich 109 abtropft. Es kann vermieden werden, dass Wasser auf die obere Rippe 106 gelangt. Der zweite Dichtungsschlauch 125 muss nicht alleine als Abdichtung des Trockenbereichs 108 zum Nassbereich 109 dienen. Die Abtropflippe 121 dichtet den Nassbereich 109 primär gegen den Trockenbereich 108 ab. Somit wird ein Leckage-Risiko verringert. Das zweite Dichtungsprofil 120 folgt in ihrer Lage dem Rahmen 104 und nicht den Dachelement 103. Somit kann das eindringende Wasser 107 konsequent durch die Abtropflippe 121 von dem Rahmen 104 weggeleitet werden. Eine unterschiedliche Wölbung des Rahmens 104 zur Wölbung des Fahrzeugdachs 101, die sich beispielsweise in Z-Richtung um mehrere Millimeter voneinander unterscheiden, führt nicht zu einem Abheben der Abtropflippe 121 von der Rippe 106. Der Abstand von dem Rahmen 104 zum zweiten Dichtungsprofil 120 variiert nicht entlang des Rahmens 104. Somit wird die Dichtungsfunktion an der Abtropflippe 121 auch im Toleranzfall robust sichergestellt.

Das erste Dichtungsprofil 110 kommt ohne Sekundärballon aus, der in herkömmlichen Dachausschnittsdichtungen notwendig ist. Die Entkopplung der einzelnen Dichtfunktionalitäten in die zwei eigenständigen Dichtungsprofile 110, 120 ermöglicht, dass die Abtropflippe 121 unabhängig der Wölbungsverhältnisse von Rahmen 104 zu Fahrzeugdach 101 stets die gleiche Relativposition und somit Überpressung zum Rahmen 104 aufweist. Eindringendes Wasser 107 wird von der oberen Rippe 106 abgehalten, wodurch eine Erhöhung der Robustheit des gesamten Wassermanagements erzielt wird. Insbesondere wird eine Verbesserung der Zuverlässigkeit des Wassermanagements im Übergangsbereich zwischen der Führungsschiene des Rahmens 104 zum vorderen Rahmenteil des Rahmens 104 ermöglicht. Die Position und somit die Überpressung der Abtropflippe 121 zum Rahmen 104 ist reproduzierbar. Das anmeldungsgemäße Dichtkonzept ist sowohl für Stahl- als auch Aluminiumdachhäute des Fahrzeugdachs 101 einsetzbar. Aufgrund des Entfalls der Sekundärballons an dem ersten Dichtungsprofil 110 im Vergleich zu herkömmlichen Dachausschnittsdichtungen wird das Dichtkonzept vereinfacht. Insgesamt ist somit durch die zwei separaten Dichtungsprofile 110, 120 ein zuverlässiges Wassermanagement ermöglicht.

## Patentansprüche

1. Dachanordnung für ein Fahrzeugdach (101) mit einer Dachöffnung (102), aufweisend
- ein bewegliches Dachelement (103) zum wahlweisen Verschließen oder zumindest teilweisen Freigeben der Dachöffnung (102), wobei das Dachelement (103) von einem Rahmen (104) gehalten ist,
- ein erstes strangförmiges Dichtungsprofil (110)
- ein zweites strangförmiges Dichtungsprofil (120), das separat zu dem ersten Dichtungsprofil (110) ausgebildet ist, wobei
- das erste Dichtungsprofil (110) zur Abdichtung gegenüber dem beweglichen Dachelement (103) eingerichtet ist und an dem Fahrzeugdach (101) befestigbar ist, und
- das zweite Dichtungsprofil (120) an dem Rahmen (104) befestigt ist und zur Abdichtung gegenüber dem Rahmen (104) eingerichtet ist, **dadurch gekennzeichnet, dass** das zweite Dichtungsprofil (120) eine Abtropflippe (121) aufweist, die an dem Rahmen (104) anliegt.

2. Dachanordnung nach Anspruch 1, bei der die Abtropflippe (121) länglich vorspringend ausgebildet ist, um eine gemeinsame Kontaktfläche (122) mit dem Rahmen (104) auszubilden, an der die Abtropflippe (121) an dem Rahmen (104) anliegt.

3. Dachanordnung nach Anspruch 1 oder 2, bei der das zweite Dichtungsprofil (120) und der Rahmen (104) eine gemeinsame Klebeverbindung (123) aufweisen.

4. Dachanordnung nach Anspruch 3, bei der sich die Abtropflippe (121) von der Klebeverbindung (123) zum Rahmen (104) erstreckt.

5. Dachanordnung nach einem der Ansprüche 1 bis 4, bei der das erste Dichtungsprofil (110) eine Montagefläche (111) aufweist, mit der das erste Dichtungsprofil (110) an dem Fahrzeugdach (101) befestigbar ist.

6. Dachanordnung nach einem der Ansprüche 1 bis 5, bei der das zweite Dichtungsprofil (120) eine Dichtlippe (124) aufweist zum Abdichten gegenüber dem Fahrzeugdach (101).

7. Dachanordnung nach einem der Ansprüche 1 bis 6, bei der das erste Dichtungsprofil (110) eine weitere Abtropflippe (112) aufweist.

8. Dachanordnung nach einem der Ansprüche 1 bis 7, bei der das erste Dichtungsprofil (110) einen ersten Dichtungsschlauch (113) aufweist und das zweite Dichtungsprofil (120) einen zweiten Dichtungsschlauch (125) aufweist.

9. Fahrzeugdach mit einer Dachöffnung (102), aufweisend:
- eine Dachanordnung (100) nach einem der Ansprüche 1 bis 8, wobei
- der Rahmen (104), der das bewegliche Dachelement (103) hält, mit dem Fahrzeugdach (101) gekoppelt ist, und
- das erste strangförmige Dichtungsprofil (110) an dem Fahrzeugdach (101) befestigt ist.

10. Fahrzeugdach nach Anspruch 9, bei dem das erste Dichtungsprofil (110) und das zweite Dichtungsprofil (120) entlang einer Hauptausdehnungsrichtung (X) zumindest abschnittsweise einen sich ändernden Abstand (105) zueinander aufweisen.

## Claims

1. Roof arrangement for a vehicle roof (101) with a roof opening (102), having
- a movable roof element (103) for optionally closing or at least partially opening the roof opening (102), wherein the roof element (103) is held by a frame (104),
- a first strand-like sealing profile (110)
- a second strand-like sealing profile (120) which is formed separately from the first sealing profile (110), wherein
- the first sealing profile (110) is configured for sealing in relation to the movable roof element (103) and is fastenable to the vehicle roof (101), and
- the second sealing profile (120) is fastened to the frame (104) and is configured for sealing in relation to the frame (104), **characterized in that** the second sealing profile (120) has a drip lip (121) which lies against the frame (104).

2. Roof arrangement according to Claim 1, wherein the drip lip (121) is configured to protrude longitudinally in order to form a common contact surface (122) with the frame (104), the drip lip (121) lying on said contact surface against the frame (104).

3. Roof arrangement according to Claim 1 or 2, wherein the second sealing profile (120) and the frame (104) have a common adhesively bonded connection (123).

4. Roof arrangement according to Claim 3, wherein the drip lip (121) extends from the adhesively bonded connection (123) to the frame (104).

5. Roof arrangement according to one of Claims 1 to 4, wherein the first sealing profile (110) has a mounting surface (111), the first sealing profile (110) being fastenable thereby to the vehicle roof (101).

6. Roof arrangement according to one of Claims 1 to 5, wherein the second sealing profile (120) has a sealing lip (124) for sealing in relation to the vehicle roof (101) .

7. Roof arrangement according to one of Claims 1 to 6, wherein the first sealing profile (110) has a further drip lip (112).

8. Roof arrangement according to one of Claims 1 to 7, wherein the first sealing profile (110) has a first sealing tube (113) and the second sealing profile (120) has a second sealing tube (125).

9. Vehicle roof with a roof opening (102), having:
- a roof arrangement (100) according to one of Claims 1 to 8,
wherein
- the frame (104) which holds the movable roof element (103) is coupled to the vehicle roof (101), and
- the first strand-like sealing profile (110) is fastened to the vehicle roof (101).

10. Vehicle roof according to Claim 9, wherein in a main direction of extent (X) the first sealing profile (110) and the second sealing profile (120) at least partially have a changing spacing (105) from one another.

## Revendications

1. Ensemble de toit pour un toit de véhicule (101) pourvu d'une ouverture de toit (102), présentant
- un élément de toit mobile (103) destiné à sélectivement fermer ou au moins en partie libérer l'ouverture de toit (102), l'élément de toit (103) étant maintenu par un cadre (104),
- un premier profilé d'étanchéité en forme de cordon (110),
- un deuxième profilé d'étanchéité en forme de cordon (120) qui est réalisé séparément du premier profilé d'étanchéité (110), dans lequel
- le premier profilé d'étanchéité (110) est aménagé pour assurer une étanchéité par rapport à l'élément de toit mobile (103) et peut être fixé au toit de véhicule (101), et
- le deuxième profilé d'étanchéité (120) est fixé au cadre (104) et est aménagé pour assurer une étanchéité par rapport au cadre (104),
**caractérisé en ce que** le deuxième profilé d'étanchéité (120) présente une lèvre d'égouttage (121) qui s'applique contre le cadre (104).

2. Ensemble de toit selon la revendication 1, dans lequel la lèvre d'égouttage (121) est réalisée en saillie longitudinale pour réaliser une surface de contact commune (122) avec le cadre (104) au niveau de laquelle la lèvre d'égouttage (121) s'applique contre le cadre (104).

3. Ensemble de toit selon la revendication 1 ou 2, dans lequel le deuxième profilé d'étanchéité (120) et le cadre (104) présentent une jonction adhésive commune (123) .

4. Ensemble de toit selon la revendication 3, dans lequel la lèvre d'égouttage (121) s'étend de la jonction adhésive (123) au cadre (104).

5. Ensemble de toit selon l'une quelconque des revendications 1 à 4, dans lequel le premier profilé d'étanchéité (110) présente une surface de montage (111) qui permet de fixer le premier profilé d'étanchéité (110) au toit de véhicule (101).

6. Ensemble de toit selon l'une quelconque des revendications 1 à 5, dans lequel le deuxième profilé d'étanchéité (120) présente une lèvre d'étanchéité (124) pour assurer une étanchéité par rapport au toit de véhicule (101).

7. Ensemble de toit selon l'une quelconque des revendications 1 à 6, dans lequel le premier profilé d'étanchéité (110) présente une lèvre d'égouttage (112) supplémentaire.

8. Ensemble de toit selon l'une quelconque des revendications 1 à 7, dans lequel le premier profilé d'étanchéité (110) présente un premier tube d'étanchéité (113) et le deuxième profilé d'étanchéité (120) présente un deuxième tube d'étanchéité (125).

9. Toit de véhicule pourvu d'une ouverture de toit (102), présentant :
- un ensemble de toit (100) selon l'une quelconque des revendications 1 à 8, dans lequel
- le cadre (104) qui maintient l'élément de toit mobile (103) est couplé au toit de véhicule (101), et
- le premier profilé d'étanchéité (110) en forme de cordon est fixé au toit de véhicule (101).

10. Toit de véhicule selon la revendication 9, dans lequel le premier profilé d'étanchéité (110) et le deuxième profilé d'étanchéité (120) présentent le long d'une direction d'extension principale (X) au moins par endroits une distance (105) variable l'un par rapport à l'autre.
